# EUROPÄISCHE PATENTANMELDUNG

(11) **EP 1 829 457 A1**
(43) Veröffentlichungstag der Anmeldung: **05.09.2007**
(21) Anmeldenummer: 06004226.4
(22) Anmeldetag: 02.03.2006
(51) Int. Cl.: A23L 2/54, A23L 2/68, A23L 2/02, A23C 21/08, C12C 7/28

(54) **Molke enthaltendes Getränk**

(71) Anmelder: Flensburger Brauerei Emil Petersen GmbH & Co. KG, 24937 Flensburg (DE)
(72) Erfinder: Sauer, Werner, 24937 Flensburg (DE)
(74) Vertreter: Schmit Chretien Schihin & Mahler

(57) **Zusammenfassung**

Die Erfindung betrifft ein Wellnessgetränk, das enthält: 20-40 Gew.-% Molke, 10-30 Gew.-% Sauergut, 4 bis 12 Gew.-% Mehrfrucht-Grundstoffkonzentrat und Wasser und gegebenenfalls weitere Komponenten auf 100 Gew.-%, sowie 5,5-6,5 g gelöstes Kohlendioxid pro Liter Fertiggetränk.

## Beschreibung

Wellnessgetränke erfreuen sich zunehmender Beliebtheit. Sie bestehen grundsätzlich aus mehreren verschiedenen Komponenten, wie Wasser, Tee, Fruchtsäften bzw. Fruchtsaftkonzentraten, Pflanzenextrakten, Bier. Dabei ist die Mehrheit der Wellnessgetränke alkoholfrei. Es gibt aber auch Varianten mit einem geringen Alkoholgehalt (alkoholarm) auf dem Markt.

Allgemein sind Wellnessgetränke wohlschmeckend und bekömmlich. Des Weiteren sollen Sie für den Konsumenten verschiedene Zusatznutzen erfüllen, wie z.B. Wohlbefinden schaffen oder eine positive Wirkung auf das Immunsystem und die Gesundheit ausüben. Zu diesem Zweck sind die Wellnessgetränke oftmals mit Mineralien und Vitaminen angereichert, und um ihren Kaloriengehalt zu reduzieren, werden neben den Süßungsmitteln wie Glucose oder Fructose zum Teil auch künstliche Süßstoffe eingesetzt. Als Säuerungsmittel wird statt Citronensäure Milchsäure verwendet.

Einige der Getränke enthalten eine Komponente, die vor der Abfüllung einer Fermentation unterzogen wurde, etwa mit einer Kefirkultur oder einem Kombuchapilz. Bei dieser Fermentation sollen ernährungsphysiologisch relevante Stoffwechselprodukte entstehen.

Aufgabe der Erfindung ist die Bereitstellung eines neuen alkoholfreien kohlensäurehaltigen Wellnessgetränks, das
1. Milchsäure enthält, die ausschließlich durch natürliche Fermentation eines Substrates aus Malz durch Lactobacillen entsteht,
2. keinen Zusatz einer direkten Süßungskomponente wie Invertzuckersirup bzw. Glucose oder künstlichen Süßstoffen erfordert.

Erfindungsgemäß wird diese Aufgabe durch ein Wellnessgetränk mit der in Anspruch 1 definierten Zusammensetzung gelöst.

Vorteilhafte und/oder bevorzugte Ausführungsformen des erfindungsgemäßen Wellnessgetränks sind Gegenstand der Unteransprüche.

Die Erfindung betrifft ferner ein Verfahren und ein System zur Herstellung des erfindungsgemäßen Wellnessgetränks wie in den Ansprüchen 5 bzw. 6 definiert.

Molke ist eine wässrige, leicht gelbliche Flüssigkeit, die bei der Käse- und Quarkherstellung als Nebenprodukt entsteht. Die Molke scheidet sich als Flüssigkeit von der Käse-/Quarkmasse ab. Man unterscheidet drei Sorten von Molke. Süßmolke entsteht, wenn Milch durch Zugabe von Lab (ein Enzym aus dem Kälbermagen) eingedickt wird. Das genaue Verfahren der Käseherstellung und die Molkeentstehung ist z.b. bei Belitz¹ ausführlich beschrieben. Sauermolke entsteht, wenn Milchsäurebakteri-en verwendet werden, um den Gerinnungsprozess einzuleiten, so dass sich Dickmilch oder Quark absetzen, die dann zu Käse weiterverarbeitet werden können. Übrig bleibt die Molke. Süßmolke und Sauermolke unterscheiden sich in ihrer Zusammensetzung nur geringfügig. Desweiteren gibt es noch eine sog. Caseinmolke. Die erfindungsgemäß verwendete Molke kann Süßmolke sein, die bei der Käseherstellung anfällt. Ihr Trockensubstanzgehalt liegt bei 5-6,5 Gew.-%, und das Molkepulver besteht zum größten Teil aus Lactose (Milchzucker). Süßmolke enthält ca. 4,8 g/100 g Lactose und Sauermolke rund 4,6 g/100 g Lactose. Des Weiteren enthält sie noch eine Reihe von Vitaminen und Mineralstoffe. Die genaue Zusammensetzung der Molke ist nicht wichtig. Sie kann je nach Herkunft der Milch (Kuh, Ziege, Schaf) sowie durch die Art des hergestellten Käses und des dazu notwendigen Behandlungsverfahrens schwanken.
¹ Belitz, Grosche, Schieberle: Milch- und Milchprodukte. In: Belitz, Grosch, Schieberle: Lehrbuch der Lebenstnittlechemie, Springer Verlag 2001, S. 520-530

Bei dem erfindungsgemäß verwendeten Sauergut handelt es sich um ein in der Brauerei erzeugtes Produkt. Für die Herstellung wird aus Malz eine Würze hergestellt, die keinen Hopfen enthält. Diese wird dann in einem Behälter unter anaerober Atmosphäre bei Temperaturen zwischen 45 und 50°C mit Hilfe einer geeigneten Lactobacillen-Kultur analog dem von Back² beschriebenen Verfahren fermentiert. Als mögliche Lactobacillen-Stämme kommen dafür beispielsweise in Frage: Lactobacillus amylolyticus, Lactobacillus fermentum, Lactobacillus delbrückii und andere. Als Stoffwechselprodukt entsteht dabei die natürliche Milchsäure. Das Sauergut weist gegen Ende der Fermentation einen Gehalt von z.B. 1,6 Gew.% titrierbarer Säure auf. Ein Liter reines Sauergut enthält in diesem Fall 16 g Milchsäure. Die genaue Zusammensetzung des Sauerguts ist nicht wichtig. Sie kann je nach Sorte des verwendeten Malzes, der Art und dem Zustand der verwendeten Lactobacillenkultur sowie der Beschaffenheit der verwendeten Würze schwanken. Weist das fertig ausgemischte Getränk einen Sauergutanteil von 20 Gew.% mit 1,6 Gew.% titrierbarer Säure auf, so resultiert daraus ein Milchsäuregehalt des Fertiggetränkes von 3,2 g/l.
² Back, W. : Hefetechnologie und Gärung. In: Back, W.: Ausgewählte Kapitel der Brauereitechnologie, Verlag Hans Carl, Nürnberg, 2005, S. 103-116

Bei dem erfindungsgemäß verwendeten Mehrfrucht-Grundstoffkonzentrat handelt es sich beispielsweise um ein Produkt der Fa. Döhler GmbH in Darmstadt (www.doehler.com). Es enthält Birnensaft, Pfirsichsaft, Maracujasaft, Aloe-Vera-Extrakt, Malvenextrakt, Melissenextrakt, natürliche Aromen und Ascorbinsäure. Dieser Grundstoff wird z.B. von der Fa. Brohler Mineral- und Heilbrunnen GmbH, Brohl-Lützing für die Herstellung des Getränkes "Steinsieker Wellness mit Aloe Vera" verwendet. Durch den Mehrfrucht-Grundstoff werden der in dem Fruchtsaft enthaltene natürliche Fruchtzucker (Fructose) sowie natürliche Säuren der Früchte mit in das erfindungsgemäße Wellnessgetränk eingebracht. Die genaue Zusammensetzung des Mehrfrucht-Grundstoffs ist nicht wichtig. Sie kann in Abhängigkeit von den verwendeten Früchten bzw. deren jeweiligem Anteil im Konzentrat schwanken. Andere Grundstoffe und Fruchtzusammensetzungen sind ebenfalls möglich.

Die Süße des erfindungsgemäßen Wellnessgetränks setzt sich insgesamt aus der Lactose der Molke, der Fructose des Mehrfrucht-Grundstoffkonzentrats und dem Restzuckergehalt des Sauerguts zusammen. Zusammen mit der Milchsäure des Sauergutes, den Fruchtsäuren und den Extrakt- und Eiweißstoffen ergibt sich bei dem erfindungsgemäßen Wellnessgetränk ein harmonischer, abgerundeter Geschmack. Ein bestimmter erwünschter Geschmack wird durch Variation der einzelnen Komponenten in den definierten Bereichen eingestellt.

Das Sauergut ist durch die verschiedenen Inhaltsstoffe und die Milchsäurebakterien selbst trübe. Die Molke weist durch ihre Inhaltsstoff ebenfalls eine natürliche Trübung auf. Deshalb ist das erfindungsgemäße Wellnessgetränk nach der Ausmischung ebenfalls trüb. Hier besteht die Möglichkeit einer Klärung des fertig ausgemischten Wellnessgetränks oder der einzelnen Komponenten durch ein geeignetes Verfahren, z.B. durch Ultra- oder Nanofiltration oder Zentrifugation.

Durch den Zusatz von weiteren natürlichen Grundstoffen oder Fruchtkonzentraten ist es möglich, das Getränk in der gewünschten Farbe einzustellen (z.B. durch Zugabe von Rote-Beeren-Konzentrat oder Rote-Beete-Konzentrat).

Nach dem Ausmischen wird das Wellnessgetränk auf einen Gehalt von 5,5-6,5 g/l CO₂, z.B. 6 g CO₂/l, aufcarbonisiert.

Das Fertiggetränk hat einen pH-Wert unter 3,5. Es sollte aber klar sein, dass der pH-Wert je nach Rezeptur schwanken kann.

Die in der Beschreibung und in den Patentansprüchen angegebenen Bereiche für den Gehalt an Molke, Wasser, Sauergut, Mehrfrucht-Grundstoffkonzentrat bzw. gelöstes Kohlendioxid sind nicht kritisch und können auch unter- oder überschritten werden, solange der harmonische, abgerundete Geschmack des Fertiggetränks erhalten bleibt.

### Bezugsquellen für Süßmolke:

Nordmilch eG
Hasselbecker Ring 1
24980 Nordhackstedt

Meiereigenossenschaft Holtsee-Ascheberg eG
Dorfstraße 2
24363 Holtsee

Zentralkäserei Mecklenburg-Vorpommern GmbH
Am Bahndamm 7
17159 Dargun

Müriz-Milch GmbH
Ernst-Albanstraße 11
17192 Waren

### Bezugsquelle für Sauermolke:

Osterhusumer Meierei Witzwort eG
Süden 11
25889 Witzwort

### Bezugsquellen für Grundstoffe + Aromen:

Döhler Gruppe
Riedstraße
64295 Darmstadt

Rudolf Wild GmbH & Co. KG
Rudolf-Wild-Straße 107-115
69214 Heidelberg/Eppelheim

Bell Europe
Schimmelstraße 1
04205 Leipzig/Miltitz

Frutarom Germany GmbH
Reeser Strasse 60
46446 Emmerich

Sensient Flavors GmbH
Beim Struckenberge 1-9
28239 Bremen

Symrise GmbH & Co. KG
Anton-Jaumann-Industriepark 9
86720 Nördlingen

## Patentansprüche

1. Wellnessgetränk, das enthält: 20-40 Gew.-% Molke, 10-30 Gew.-s Sauergut, 4 bis 12 Gew.-% Mehrfrucht-Grundstoffkonzentrat und Wasser und gegebenenfalls weitere Komponenten auf 100 Gew.-%, sowie 5,5-6,5 g gelöstes Kohlendioxid pro Liter Fertiggetränk.

2. Wellnessgetränk nach Anspruch 1, das enthält: 27-40 Gew.-% Molke, 15-25 Gew.-% Sauergut, 6-10 Gew.-% Mehrfrucht-Grundstoffkonzentrat und Wasser und gegebenenfalls weitere Komponenten auf 100 Gew.-%, sowie 5,5-6,5 g gelöstes Kohlendioxid pro Liter Fertiggetränk.

3. Wellnessgetränk nach Anspruch 1 oder 2, das enthält: 40 Gew.-% Molke, 25 Gew.-% Sauergut, 8,5 Gew.-% Mehrfrucht-Grundstoffkonzentrat und Wasser auf 100 Gew.-%, sowie 5,5-6,5 g gelöstes Kohlendioxid pro Liter Fertiggetränk.

4. Wellnessgetränk nach Anspruch 1 oder 2, das enthält: 35 Gew.-% Molke, 20 Gew.-% Sauergut, 7 Gew.-% Mehrfrucht-Grundstoffkonzentrat und Wasser auf 100 Gew.-%, sowie 5,5-6,5 g gelöstes Kohlendioxid pro Liter Fertiggetränk.

5. Verfahren zur Herstellung eines Wellnessgetränks nach einem der vorstehenden Ansprüche, bei dem Molke, Wasser, Sauergut, Mehrfrucht-Grundstoffkonzentrat sowie gegebenenfalls weitere Komponenten in den in den vorstehenden Ansprüchen definierten Gew.-%-Bereichen vermischt werden und das erhaltene Fertiggetränk mit 5,5-6,5 g Kohlendioxid pro Liter carbonisiert wird.

6. System zur Herstellung eines Wellnessgetränks nach einem der vorstehenden Ansprüche, mit Einrichtungen zum Vermischen von Molke, Wasser, Sauergut, Mehrfrucht-Grundstoffkonzentrat sowie gegebenenfalls weiteren Komponenten in den in den vorstehenden Ansprüchen definierten Gew.-%-Bereichen und Einrichtungen zum Carbonisieren des erhaltenen Fertiggetränks mit 5,5-6,5 g Kohlendioxid pro Liter.
